# EUROPÄISCHE PATENTANMELDUNG

(11) **EP 1 411 292 A2**
(43) Veröffentlichungstag der Anmeldung: **21.04.2004**
(21) Anmeldenummer: 03103715.3
(22) Anmeldetag: 07.10.2003
(51) Int. Cl.: F21S 8/10, F21V 19/00, F21V 17/00

(54) **Scheinwerfer für Fahrzeuge**

(30) Priorität: 15.10.2002 DE 10247943
(71) Anmelder: Hella KG Hueck & Co., 59552 Lippstadt (DE)
(72) Erfinder: Brummel, Reinhold, 59609, Anröchte (DE); Borgschulte, Hubert, 59609, Anröchte (DE)

(57) **Zusammenfassung**

Die Erfindung betrifft einen Scheinwerfer für Fahrzeuge mit einer Gasentladungslampe, die vermittels eines mindestens zwei Haken (6,7) eines ersten Teils (1) mit korrespondierenden Durchbrüchen (14,17) eines zweiten Teils (2) aufweisenden Bajonettverschlusses (4) mit einer Zündeinrichtung (1) lösbar befestigbar ist, wobei ein Referenzhaken (6) und/oder ein Referenzdurchbruch (17) vorgesehen sind, derart, dass das erste Teil (1) nur in einer einzigen vorgegebenen Anlageposition mit dem zweiten Teil (2) verbindbar ist.

## Beschreibung

Die Erfindung betrifft einen Scheinwerfer für Fahrzeuge mit einer Gasentladungslampe, die vermittels eines mindestens zwei Haken eines ersten Teils mit korrespondierenden Durchbrüchen eines zweiten Teils aufweisenden Bajonettverschlusses mit einer Zündeinrichtung lösbar befestigbar ist.

Aus der DE 197 53 605 A1 ist ein Scheinwerfer für Fahrzeuge mit einer Gasentladungslampe bekannt, die mittels eines Halterings an einem Reflektor des Scheinwerfer befestigbar ist. Der Haltering ist mittels eines Bajonettverschlusses an dem Reflektor befestigt und weist Haken auf, die in korrespondierende Durchbrüche des Reflektors eingreifen. An einer Rückseite der Gasentladungslampe ist eine Zündeinrichtung über Verriegelungselemente mit dem Reflektor verbunden.

Der Bajonettverschluss ist rotationssymmetrisch ausgebildet, so dass es auf die Art der Anlage der zu verbindenden Teile nicht ankommt.

Aufgabe der vorliegenden Erfindung ist es, einen Scheinwerfer für Fahrzeuge derart weiterzubilden, dass zwei zu verbindende Bauteile des Scheinwerfer mittels eines Bajonettverschlusses miteinander verbindbar sind einerseits und die Teile in der Montageposition eine eindeutige und vorgegebene Position in Umfangsrichtung andererseits einnehmen.

Zur Lösung dieser Aufgabe ist der erfindungsgemäße Scheinwerfer dadurch gekennzeichnet, dass ein Referenzhaken und/oder ein Referenzdurchbruch vorgesehen sind, derart, dass das erste Teil nur in einer einzigen vorgegebenen Anlageposition mit dem zweiten Teil verbindbar ist.

Der besondere Vorteil der Erfindung besteht darin, dass durch die Ausbildung eine Referenzhakens und eines Referenzdurchbruches des Bajonettverschlusses eine fest vorgegebene Anlagepositionierung der zu verbindenden Teile ermöglicht wird. Somit kann im Reparaturfall wirksam verhindert werden, dass nach Lösen der Zündeinrichtung von der Fassung der Lampe bzw. dem Reflektor dieselbe unter verdrehter Anlage um einen Winkel wieder montiert wird. Die Erfindung erzwingt eine Befestigung der Zündeinrichtung an der Fassung der Lampe bzw. des Reflektors in einer festgelegten Drehposition, so dass eine unerwünschte Einwirkung eines unter einer falschen Drehpositionierung angebrachten Zündeinrichtung auf ein weiteres Bauteil des Scheinwerfers vermieden wird. Insbesondere bei einer unsymmetrischen Geometrie der Zündeinrichtung wird durch die erfindungsgemäß vorgegebene Anlagepositionierung bei der Montage der zu verbindenden Teile eine unerwünschte Beanspruchung anderer Bauteile vermieden.

Nach einer bevorzugten Ausführungsform der Erfindung ist der Referenzhaken oder der Referenzdurchbruch derart ausgebildet, dass eine Montage der zu verbindenden Teile nur durch Anlage des Referenzhakens an dem Referenzdurchbruch ermöglicht wird. Vorteilhaft ist der Referenzhaken und der Referenzdurchbruch visuell erkennbar und unterschiedlich zu den weiteren Haken bzw. Durchbrüchen ausgebildet, so dass bei der Montage eine eindeutige Zuordnung der Haken zu den Durchbrüchen gewährleistet ist. Hierdurch ergeben sich keine Verzögerungen bei der Montage.

Nach einer Weiterbildung der Erfindung ist der Referenzdurchbruch durch Aufsetzen eines Festlegelementes auf einen den Durchbruch aufweisenden Kranzabschnitt gebildet. Dadurch, dass das Festlegelement lösbar mit dem Kranzabschnitt verbunden ist, kann ein beliebiger Kranzabschnitt zu einem mit einem Referenzdurchbruch versehenen Referenzkranzabschnitt definiert werden.

Nach einer Weiterbildung der Erfindung weisen die Haken des ersten Teils mit Ausnahme des Referenzhakens axiale Erhebungen auf, so dass sie bei einer Verbindung mit einem Referenzdurchbruch mittels eines Blockierelementes des Festlegelementes daran gehindert werden, eine klemmende Position einzunehmen. Dadurch, dass einer von mehreren Haken eine andere Formgebung aufweist, ist dieser als Referenzhaken erkennbar. Durch das Vorsehen eines Blockierelementes am Festlegelement ist sichergestellt, dass nur der Referenzhaken mit dem Referenzdurchbruch zusammenwirken kann.

Bei einer Weiterbildung der Erfindung ist das erste Teil als eine Zündeinrichtung und das zweite Teil als eine Fassung der Gasentladungslampe ausgebildet. Vorteilhaft wird hierdurch eine direkte Verbindung zwischen Gasentladungslampe und der Zündeinrichtung gewährleistet. Es ist keine zusätzliche Halteeinrichtung erforderlich.

Ein Ausführungsbeispiel wird nachfolgend anhand der Zeichnungen näher erläutert.

Es zeigen:
- Figur 1: eine perspektivische Darstellung einer Zündeinrichtung und einer Fassung einer Gasentladungslampe in einer Verriegelungsposition,
- Figur 2: eine perspektivische Darstellung einer Zündeinrichtung,

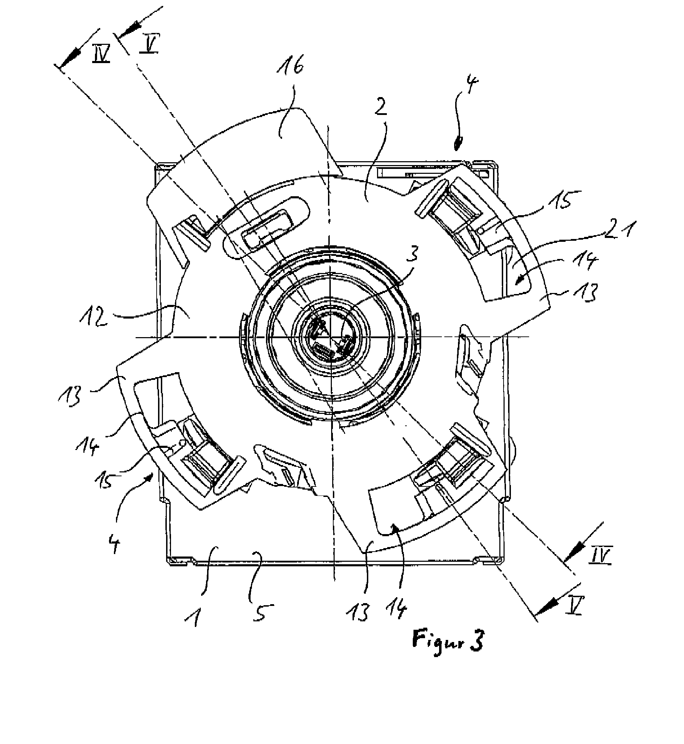

- Figur 3: eine Vorderansicht einer Fassung der Gasentladungslampe, die sich in einer Verriegelungsposition zu der dahinter angeorndeten Zündeinrichtung befindet,

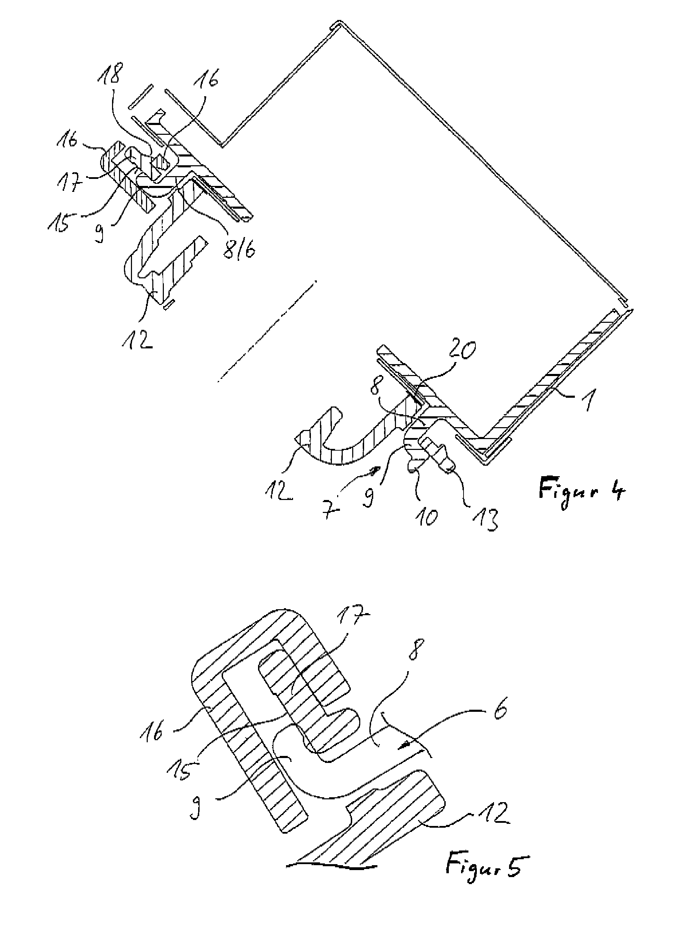

- Figur 4: einen Schnitt entlang der Linie IV-IV in Figur 3 und
- Figur 5: einen Schnitt entlang der Linie V-V in Figur 3.

Ein Scheinwerfer für Fahrzeuge weist als erstes Teil eine Zündeinrichtung 1 und als zweites Teil eine Fassung 2 einer nicht dargestellten Gasentladungslampe auf. Die Gasentladungslampe ist in üblicher Weise mit Kontaktelementen 3 der Zündeinrichtung 1 elektrisch verbunden.

Die Zündeinrichtung 1 ist unmittelbar an der Fassung 2 der Gasentladungslampe mittels einer Bajonettverschlusses 4 lösbar verbunden. Zu diesem Zweck weist die Zündeinrichtung 1 auf einer der Fassung 2 zugewandten Gehäuseseite 5 einen abragenden Referenzhaken 6 sowie drei weitere Haken 7 auf, die jeweils in einem Winkel von 90° zueinander versetzt angeordnet sind. Der Referenzhaken 6 und die Haken 7 weisen jeweils einen von der Gehäuseseite 5 abragenden Hakenfuß 8 und einen jeweils radial nach außen hin weisenden und sich an den Hakenfuß 8 anschließenden Klemmabschnitt 9 auf.

Zusätzlich weisen die drei Haken 7 sich von dem Klemmabschnitt 9 in axialer Richtung abragende Axialnase 10 auf.

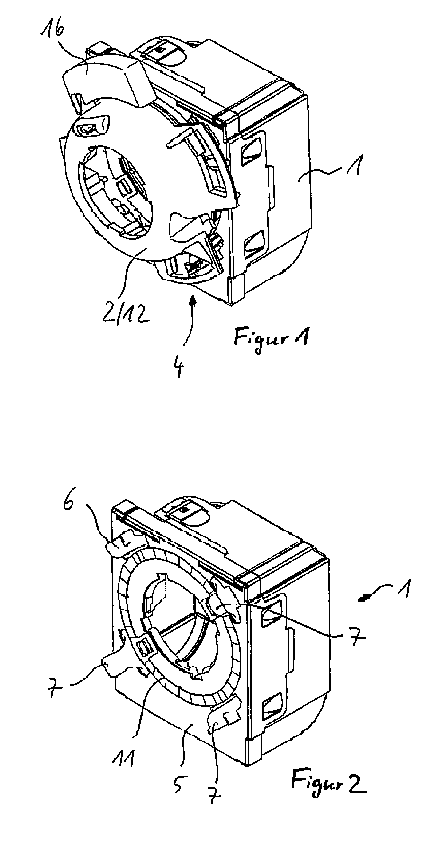

Wie aus Figur 2 zu ersehen ist, ist eine durch die Haken 7 und den Referenzhaken 6 umrahmte Öffnung 11 der Zündeinrichtung 1 nicht mittig auf der Gehäuseseite 5 angeordnet. Das Gehäuse der Zündeinrichtung 1 ist somit nicht rotationssymmetrisch ausgebildet.

Die Fassung 2 der Gasentladungslampe weist einen topfförmigen Ring 12 auf, an den sich in radialer Richtung nach außen hin vier gleichmäßig in Umfangsrichtung verteilt angeordnete Kranzabschnitte 13 mit jeweils einem Durchbruch 14 anschließen. Die Kranzabschnitte 13 weisen jeweils in Umfangsrichtung verlaufende Verhakungsabschnitte 15 auf, die einen Teilbereich des Durchbruchs 14 begrenzen.

Um die Fassung 2 in einer vorgegebenen Drehorientierung mit der Zündeinrichtung 1 lösbar zu verbinden, wird einem Kranzabschnitt 13 ein Festlegelement 16 zugeordnet, das diesen Kranzabschnitt als einen Referenzkranzabschnitt 17 bzw. Referenzdurchbruch definiert. Das Festlegelement 16 ist als ein Kunststoffteil ausgebildet und wird klemmend auf den vorgegebenen Kranzabschnitt 13 aufgesetzt. Zu diesem Zweck weist das Festlegelement 16 auf einer der Zündeinrichtung 1 zugewandten Rückseite desselben eine Ausnehmung auf, die mit einem rampenförmigen Klemmelement 18 des Kranzabschnitts 13 zur formschlüssigen Verbindung des Festlegelementes 16 mit dem Kranzabschnitt 13 zusammenwirkt. Auf diese Weise kann das Festlegelement 16 auf einfache Weise auf den Kranzabschnitt 13 aufgesteckt bzw. wieder entfernt werden.
Zur Montage der Fassung 2 mit der Zündeinrichtung 1 wird das Festlegelement 16 auf einen Kranzabschnitt 13 klemmend aufgesteckt. Damit ist der Referenzdurchbruch bzw. der Referenzkranzabschnitt 17 definiert. In einem weiteren Schritt wird nun die Fassung 2 unter Anlage einer stirnseitigen Ringfläche 20 auf die Gehäuseseite 5 aufgesetzt, wobei die Haken 7 der Zündeinrichtung 1 durch die Durchbrüche 14 der Kranzabschnitte 13 sowie der Referenzhaken 6 durch den Referenzdurchbruch durchgreifen. Dabei greifen die Haken 7 bzw. der Referenzhaken 6 durch einen verbreiterten Umfangsabschnitt 21 des Durchbruchs 14 bzw. des Referenzdurchbruchs.

Nachfolgend erfolgt eine Relativverdrehung der Fassung 2 zu der Zündeinrichtung 1 im Uhrzeigersinn, so dass die Klemmabschnitt 9 der Haken 7 bzw. des Referenzhakens 6 klemmend auf den Verhakungsabschnitt 15 der Durchbrüche 14 bzw. des Referenzdurchbruchs drücken. Hierdurch ist eine langzeitstabile klemmende Halterung der Fassung 2 mit der Zündeinrichtung 1 gewährleistet.

Eine Verriegelung des Referenzdurchbruchs 17 mit einem Haken 7 wird dadurch verhindert, dass die Haken 7 eine Axialnase 10 aufweisen, deren axiale Erstreckung größer ist als der lichte Abstand zwischen einer Innenseite des Festlegelementes 16 und dem Verhakungsabschnitt 15 des Kranzabschnitts 13. Somit kann eine Verdrehung der Fassung 2 in eine Verriegelungsposition zu der Zündeinrichtung 1 nur dann erfolgen, wenn der Referenzhaken 6 in den Referenzdurchbruch 17 eingreifen kann. Auf diese Weise wird gemäß der Erfindung auf einfache Weise eine eindeutige Verriegelungspositionierung der zu verbindenden Teile 1 und 2 vorgegeben. Dadurch, dass das Festlegelement 16 lösbar mit einem Kranzabschnitt 13 verbindbar ist, kann ein beliebiger Kranzabschnitt 13 mit dem Festlegelement 16 verbunden werden und somit in Abhängigkeit von der Geometrie der zu verbindenden Bauteile bzw. der Geometrie der benachbarten Bauteile eine vorgegebene relative Montageposition der zu verbindenden Teile festgelegt werden.

## Patentansprüche

1. Scheinwerfer für Fahrzeuge mit einer Gasentladungslampe, die vermittels eines mindestens zwei Haken eines ersten Teils mit korrespondierenden Durchbrüchen eines zweiten Teils aufweisenden Bajonettverschlusses mit einer Zündeinrichtung lösbar befestigbar ist, **dadurch gekennzeichnet, dass** ein Referenzhaken (6) und/oder ein Referenzdurchbruch (17) vorgesehen sind, derart, dass das erste Teil (1) nur in einer einzigen vorgegebenen Anlageposition mit dem zweiten Teil (2) verbindbar ist.

2. Scheinwerfer nach Anspruch 1, **dadurch gekennzeichnet, dass** der Referenzhaken (6) derart ausgebildet ist, dass er ausschließlich mit dem Referenzdurchbruch (17), aber nicht mit den anderen Durchbrüchen (14) verbindbar ist, und vice versa.

3. Scheinwerfer nach Anspruch 1 oder 2, **dadurch gekennzeichnet, dass** zur Bildung eines Referenzdurchbruchs (17) einem Durchbruch (14) ein Festlegelement (16) zugeordnet ist, mittels dessen der Referenzdurchbruch (17) ausschließlich mit dem Referenzhaken (6) verklemmbar ist.

4. Scheinwerfer nach einem der Ansprüche 1 bis 3, **dadurch gekennzeichnet, dass** das Festlegelement (16) auf einen mit dem Durchbruch (14) versehenen radial abstehenden Kranzabschnitt (13) des zweiten Teils (2) klemmend anbringbar ist.

5. Scheinwerfer nach einem der Ansprüche 1 bis 4, **dadurch gekennzeichnet, dass** das Festlegelement (16) und/oder der Referenzhaken (6) derart ausgebildet ist, dass nur der Referenzhaken (6) nach Durchgreifen desselben durch den Durchbruch (14) auf den Verhakungsabschnitt (15) klemmbar ist.

6. Scheinwerfer nach einem der Ansprüche 1 bis 5, **dadurch gekennzeichnet, dass** die Haken (7) eine Axialnase (10) aufweisen, die bei Zusammenwirken mit dem Festlegelement (16) versehenen Kranzabschnitt (13) des zweiten Teils (2) durch ein Blockierelement (22) des Festlegelementes (16) gegen Verdrehung um die Längsachse blockiert wird.

7. Scheinwerfer nach einem der Ansprüche 1 bis 6, **dadurch gekennzeichnet, dass** das erste Teil als Zündeinrichtung (1) und das zweite Teil als eine Fassung (2) der Gasentladungslampe ausgebildet sind.

8. Scheinwerfer nach einem der Ansprüche 1 bis 7, **dadurch gekennzeichnet, dass** das Festlegelement (16) aus einem Kunststoffmaterial besteht und eine Ausnehmung aufweist, die mit einem rampenförmigen Klemmelement (18) des Kranzabschnitts (13) zur formschlüssigen Verbindung mit demselben versehen ist.

9. Scheinwerfer nach einem der Ansprüche 1 bis 8, **dadurch gekennzeichnet, dass** die axiale Erstreckung des Referenzhakens (6) kleiner ist als die axiale Erstreckung der weiteren Haken (7).

10. Scheinwerfer nach einem der Ansprüche 1 bis 9, **dadurch gekennzeichnet, dass** die Haken (7) und der Referenzhaken (6) jeweils in axialer Richtung und gleich verteilt von einer Gehäuseseite (5) der Zündeinrichtung (1) abragen.
